# EUROPÄISCHE PATENTSCHRIFT

(11) **EP 1 724 477 B1**
(45) Veröffentlichungstag und Bekanntmachung des Hinweises auf die Patenterteilung: **21.07.2010**
(21) Anmeldenummer: 06009723.5
(22) Anmeldetag: 11.05.2006
(51) Int. Cl.: F16C 17/24, F16C 33/10, F16C 37/00

(54) **Lageranordnung zur Lagerung einer Welle**
Bearing arrangement for a shaft
Dispositif de palier pour un arbre

(30) Priorität: 18.05.2005 DE 102005023575
(43) Veröffentlichungstag der Anmeldung: 22.11.2006
(73) Patentinhaber: KHS AG, 44143 Dortmund (DE)
(72) Erfinder: Bernhard, Herbert, 55578 Wolfsheim (DE)

(56) Entgegenhaltungen:
- EP-A- 0 704 635
- DE-A1- 2 639 735
- DE-A1- 3 743 086
- DE-A1- 19 615 824
- FR-A- 1 147 702
- FR-A- 1 310 614
- FR-A- 2 550 291
- US-A- 3 565 498
- US-A1- 2004 042 698

## Beschreibung

Die Erfindung bezieht sich auf eine Lageranordnung zur Lagerung einer Welle mit einer in eine Aufnahmebohrung einfügbaren Lagerhülse gemäß Oberbegriff des Anspruchs 1.

Im Zusammenhang mit der vorliegenden Anmeldung sind unter dem Begriff Welle auch Achsen, Führungsstangen oder ähnliche Elemente zu verstehen, welche eine lineare und/oder rotierende Relativbewegung zu der ihnen zugeordneten Lageranordnung ausführen. Aus Gründen der Vereinfachung wird nachfolgend lediglich von Wellen gesprochen, wodurch der Umfang der vorliegenden Erfindung allerdings nicht eingeschränkt wird.

### Stand der Technik

Derartige Lageranordnungen zur Lagerung von rotierenden Wellen sind beispielsweise bei Mehrflächengleitiagem aus keramischen Werkstoffen für Werkzeigmaschinen, insbesondere Schleifmaschinen, Drehmaschinen und dgl. mit hohen Anforderungen hinsichtlich der Laufpräzision, der Gleitgeschwindigkeit oder der Dämpfungseigenschaften bekannt. So weist ein Mehrflächengleitlager für Werkzeugmaschinen eine Trägerhülse und eine Lagerhülse auf, die als ringförmiger komplexer Keramikkörper mit einer der Trägerhülse zugewandten Au-βenfläche und einer Welle oder Spindel zugewandten Innenfläche ausgebildet ist und diese Innenfläche mindestens drei runde Ausformungen zur Aufnahme von Trag-, Gleit- oder Kühlmedien aufweist (DE 103 32 390 A1).

In der DE 195 26 497 A1 ist ein kombiniertes Axial-Radial-Gleitlager mit Keramiklaufflächen offenbart. Zwischen diesen Laufflächen ist eine Ausnehmung zur Bildung eines hydrodynamischen Schmierflüssigkeitskeils vorgesehen.

Die aus Keramik gefertigten Komponenten sind vorwiegend nur als nahezu eben geformte Bauteile ausgebildet und deshalb trotz ihrer enormen Vorteile nur partiell im Kontaktbereich zwischen rotierenden und statischen Bauteilen einsetzbar. Darüber hinaus ist deren Steifigkeit insbesondere in Bezug auf unvermeidbare Schwingungen oder Versetzungen erheblich eingeschränkt.

Aus der DE 23 56 817 A1 ist ein Radialgleitlager für eine in einer Richtung umlaufende Welle mit mehreren in Lagerumfangsrichtung oder quer dazu verlaufenden Schmiermittelfördemuten in der Lagerbohrung bekannt geworden, die mit Drucktaschen in dem die Welle aufnehmenden Lagerteil verbunden sind. Das Lagerteil ist nach außen mittels Dichtringen abgedichtet. Eine solche Ausbildung ist zur Durchleitung von Medien, beispielsweise zu Reinigungs- oder Sterilisationsaufgaben, ungeeignet, was auch bei dem eingangs geschilderten . Stand der Technik weder vorgesehen noch erforderlich ist. Weiterhin ist aus der DE 198 15 824 A1 eine Lagerbuchse bekannt, bei welcher Stege achsparallel zur Welle angeordnet sind und die Lagerbuchse mittels Erhebungen, die in eine umlaufende Nut bzw. in Aussparungen eingreifen, gegen axiale und/oder radiale Verschiebung gesichert wird. Eine vergleichbare Lösung findet sich bereits in der US 3,585,498 B.

In bestimmten Induatriebereichen, beispielsweise In der Lebensmittel-, Pharma-, oder Getränke-Industrie, bestehen erhöhte Anforderungen an die Reinigbar- oder Sterilisierbarkeit von Maschinen und deren Bauteile. Diese Anforderungen werden in bestimmten Ländern durch besondere gesetzliche Vorschriften vorgegeben oder für bestimmte Produkt-Zulassungen, beispielsweise durch die FDA, verlangt. Dies bezieht sich insbesondere auf Steril- und Reinraummaschinen sowie auch auf Abfüll- und Verpackungsmaschinen oder Bereiche der kaltaseptischen Abfüllung.

### Aufgabenstellung

Die Aufgabe der Erfindung besteht unter Berücksichtlgung der insbesondere in den vorgenannten Industriebereichen sich entwickelnden Vorgaben oder bestehenden Auflagen und Vorschriften darin, eine diesbezügliche Maschine oder Einrichtung derart auszubilden, dass alle gefährdeten Bereiche und Problemzonen einwandfrei behandelt, gereinigt oder sterilisiert werden können, ohne das sicherheitsrelevante Bedenken bei einem Dauerbetrieb zu erwarten sind. Dabei soll gleichzeitig eine vorteilhafte Lösung zur einfachen Montage und zum Austausch von entsprechenden Lagerelementen aufgezeigt werden.

Diese der Erfindung zugrunde liegende Aufgabe wird bei einer Lageranordnung nach dem Stand der Technik durch die Merkmale des Anspruchs 1 sowie der Unteransprüche gelöst.

Mit dieser Ausgestaltung und in Verbindung mit den ergänzenden Merkmalen der Unteran-sprüche und den Ausführungen in der Beschreibung wird eine besonders vorteilhafte Konstruktion zur Lösung der Erfindungsaufgabe angeboten. Insbesondere sind eine ständige und wiederholbare Reinigung und erforderlichenfalls auch eine erweiterte Sterilisation solcher Maschinenbauteile möglich. Darüber hinaus ist eine einfache Montage der eigentlichen Lagerhülse und deren Austausch durch die besondere Ausbildung gemäß den Ansprüchen 4 bis 6 gewährleistet.

Weitere Merkmale und Einzelheiten der Erfindung ergeben sich aus der nachfolgenden Beschreibung bevorzugter Ausführungsbeispiele sowie anhand der Zeichnung. Dabei bilden die beschriebenen und/oder bildlich dargestellten Merkmale für sich oder in geeigneter Kombination den Gegenstand der Erfindung. In der Zeichnung zeigt:
Figur 1 eine isometrische Ansicht einer erfindungsgemäßen Lagerhülse,
Figur 2 einen Querschnitt einer in einem Lagergehäuse eingesetzten Lagerhülse,
Figur 3 einen Längsschnitt einer eingebauten Lagerhülse und
Figur 4 ein geeignetes Einsatzbeispiel einer erfindungsgemäßen Lagerhülse.

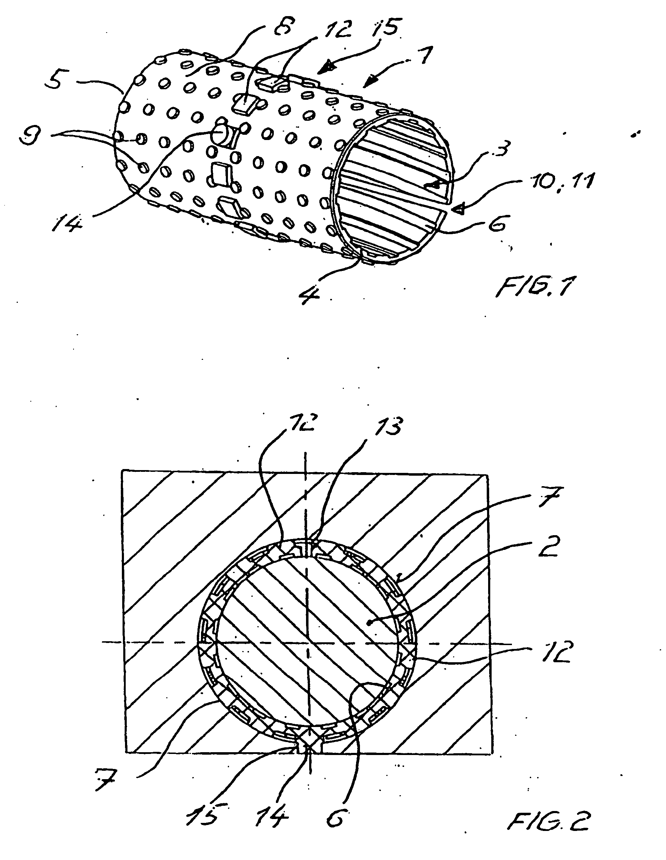

Im Nachfolgenden wird zunächst Bezug genommen auf die in Figur 1 in isometrischer Darstellung gezeigte Lagerhülse 1. Diese weist an ihrer zur Lager- oder Führungswelle 2 gerichteten inneren Bohrung 3 mehrere von einer Stirnseite 4 zur gegenüberliegenden Stimseite 5 verlaufende und nutenförmig ausgebildete Ausnehmungen oder Kanäle 6 auf. Auf dem einer Lager- und Aufnahmebohrung 7 zugewandten Außenmantel 8 sind anders geartete Erhebungen 9 vorgesehen. Für den Lagerkontakt mit der Lager- oder Führungswelle 2 und der Aufnahmebohrung 7 sind Flächen, Erhebungen, Ausnehmungen oder Kanäle 6, 9 vorgesehen, die mit entsprechend unterschiedlichen Zwischenräumen vergesehen sind. Entscheidend ist, dass diese Kanäle, Flächen und Erhebungen 6,9 einerseits eine der gestellten Aufgabe entsprechend geeignete Lagerung der Welle 2 und andererseits eine vorteilhafte Kanalausbildung zur Durchleitung und Spülung von und mit dem vorgesehenen Reinigungs- und Sterilisationsmedium zulassen. Hierbei sind die kanalbildenden Ausnehmungen, Erhebungen 6,9 und dergleichen derart angeordnet, dass eine medienlenkende Strömung erzeugbar ist, mit der alle zu reinigenden Bereiche einer solchen Lageranordnung problemlos und sicher erreicht werden.

Nach dem in Figur 1 gezeigten Ausführungsbeispiel verlaufen die Kanäle 6 parallel zueinander in wendelförmiger Anordnung unter einem frei wählbaren Winkel, wobei der gegenseitige Abstand der so gebildeten Ausnehmungen beispielsweise 5, vorzugsweise 2 mm unter Berücksichtigung einer optimalen Lager- und Reinigungseigenschaft betragen kann. Solche wendelförmig verlaufenden Ausnehmungen und Kanäle 6 können auch in mehreren Abschnitten unterteilt und versetzt zueinander am Umfang verteilt sein. Der Versatz wird dann durch Verbindungs- und Leitkanäle überbrückt. Auf diese Weise kann das Spülmedium mindestens um eine volle Umdrehung auf der zugeordneten Lagerwelle 2 bzw. durch die Lageranordnung zwangsgeführt werden. Bei der Herstellung einer solchen Lagerhülse 1 als Spritzteil können die inneren und äußeren Erhebungen zur besseren Entformung unter einem gleichen Umlaufwinkel verlaufen oder erhaben oder vertieft sein.
Der Durchmesser der Lagerhülse 1 ist gegenüber dem endgültigen Einbaudurchmesser zum Zwecke einer vereinfachten Montage veränderbar. Hierzu besitzt die Lagerhülse 1 beispielsweise mantelseitig einen Längsschlitz 10, um dessen Breite 11 sie zusammengedrückt und in ihrem Durchmesser zur Einfügung in die Aufnahmebohrung 7 entsprechend verkleinert werden kann. Auch ist es denkbar, die Lagerhülse 1 zum Zwecke des Ein- und Ausbaus entsprechend einzurollen.

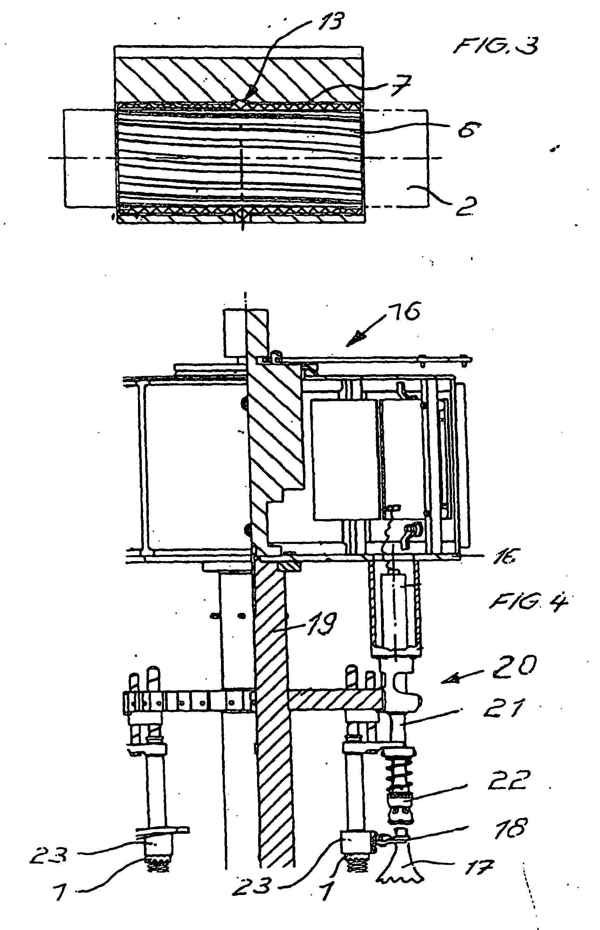

Aus den Figuren 1 bis 3 ist erkennbar, dass zur axialen Arretierung der Lagerhülse 1 auf deren Außenmantel 8 mehrere Erhebungen 12 in Form von rechteckigen Blöcken vorgesehen sind, die in eine zumindest teilweise umlaufende Nute 13 der Aufnahmebohrung 7 eingreifen und für einen sicheren Halt sorgen. Femer ist mindestens eine weitere Erhebung 14 zur Sicherung in Umfangsrichtung vorgesehen. Diese ist zweckmäßig zylindrisch oder stiftförmig ausgebildet und in eine Sicherungsbohrung 15 der Aufnahmebohrung 7 einführbar. Die Erhebungen 12,14 sind vorzugsweise auf einer gemeinsamen radialen Umfangsfläche 15 vereint angeordnet.
Ein geeignetes Einsatzbeispiel zeigt Figur 4 mit einer teilweise dargestellten Verschließmaschine 16 zum Verschließen von befüllten Behältern 17. An jeder Verschließposition ist ein Behälter- oder Flaschenhalter 18 zur Zentrierung und Halterung eines mit seiner Hochachse parallel zur Drehachse 19 der Verschließmaschine 16 angeordneten Behälters 17 vorgesehen. Weiterhin ist über dem Flaschenhalter 18 ein gesonderter Schraubwellensatz 20 vorgesehen, der unter anderem eine senkrecht verlaufende Schraubwelle 21 mit einem unteren Schraubkopf 22 aufweist.

Während des Umlaufs der Verschließmaschine 16 führt jeder Flaschenhalter 18 und damit auch der zugeordnete Behälter 17 eine gesteuerte vertikale Hubbewegung derart aus, dass von jedem Schraubkopf 22 eine nicht dargestellte Schraubkappe aufgenommen, anschließend die Behältermündung gegen die Schraubkappe bewegt und dort durch Drehen der Schraubwelle 21 aufgeschraubt und mit einem geeigneten Drehmoment festgedreht wird. In dem Flaschenhalter 18 bzw. dessen Lageranordnung 23 ist zweckmäßig eine Lagerhülse 1 entsprechend den aufgezeigten Merkmalen eingegliedert, die bei entsprechender Verschmutzung oder in vorgegebenen Intervallen gereinigt und sterilisiert werden kann. Hierzu können alle geeigneten Reinigungsmedien wie auch Reinigungs- und Sterilisationsschaum und dgl. eingesetzt werden.

## Patentansprüche

1. Lageranordnung zur Lagerung einer Welle (2) mit einer in eine Aufnahmebohrung (7) eines Maschinen- oder Gleitbauteils, Stützlagers und dergleichen einfügbaren Lagerhülse (1), wobei mindestens in der Aufnahmebohrung Ausnehmungen zur Zu- und Ableitung von Medien vorgesehen sind, wobei die Lagerhülse (1) an ihrer zur Lager- und/oder Führungswelle (2) weisenden inneren Bohrung (3) mehrere von Stirnseite (4) zu Stirnselte (5) verlaufende Ausnehmungen (6) und auf dem der Aufnahmebohrung (7) zugewandten Außenmantel (8) eine Anzahl von Erhebungen (9, 12, 14) aufweist, wobei von diesen Erhebungen (9, 12, 14) mindestens ein Teil (12, 14) zur Sicherung in axialer und in Umfangsrichtung der Lagerhülse (1) ausgebildet ist, ein Teil dieser Erhebungen (12) zur axialen Arretierung in eine mindestens teilweise umlaufende Nute (13) der Aufnahmebohrung (7) eingreifbar ausgebildet ist und der Durchmesser der Lagerhülse (1) gegenüber ihrem endgültigen Einbaudurchmesser zum Zwecke des Ein- und Ausbaus veränderbar ist, wobei
die Ausnehmungen (6) mindestens teilweise um den Mantel der Welle (2) nutenförmig und medienlenkend ausgebildet sind und wendelförmig verlaufen, wobei die Erhebungen (9) in einer Vielzahl vorgesehen sind und von dem Außenmantel (8) weg stehen, **dadurch gekennzeichnet, dass** zumindest die nicht als Sicherung der Lagerhülse dienenden Erhebungen eine zylindrische Form aufweisen.

2. Lageranordnung nach Anspruch 1, **dadurch gekennzeichnet, dass** die wendelförmig am Innenmantel der Lagerhülse (1) verlaufenden nutenförmigen Ausnehmungen (6) in mehrere Abschnitte unterteilt und untereinander durch Leitkanäle verbunden sind, wobei die wendelförmigen Abschnitte derart zueinander versetzt sind, dass das Spülmedium mindestens um eine volle Umdrehung auf der zugeordneten Lagerwelle zwangsgeführt ist.

3. Lageranordnung nach Anspruchs 1 oder 2, **dadurch gekennzeichnet, dass** die Lagerhülse (1) unterschiedlich angeordnete Flächen/Erhebungen (9) für den Lagerkontakt mit der Welle (2) und der Lagerbohrung (7) und Zwischenräume zwischen den Flächen (6) Erhebungen aufweist, wobei im Einbauzustand die Zwischenräume mit der Welle (2) und dem Mantel der Aufnahme- und Lagerbohrung (7) Kanäle zur Durchleitung von Reinigungs- und Sterilisationsmedium bilden.

4. Lageranordnung nach einem der vorhergehenden Ansprüche, **dadurch gekennzeichnet, dass** die Lagerhülse (1) mantelseitig einen Längsschlitz (10) aufweist.

5. Lageranordnung nach einem der vorhergehenden Ansprüche, **dadurch gekennzeichnet, dass** die Lagerhülse (1) um die Spaltbreite (11) eines Längsschlitzes (10) In ihrem Innen- und Außendurchmesser veränderbar Ist.

6. Lageranordnung nach einem der vorhergehenden Ansprüche, **dadurch gekennzeichnet, dass** die Lagerhülse (1) in sich einrollbar ausgebildet ist.

7. Lageranordnung nach einem der vorhergehenden Ansprüche, **dadurch gekennzeichnet, dass** die einzelnen Ausnehmungen in einem Winkel zur Lagerachse verlaufen.

8. Lageranordnung nach einem der vorhergehenden Ansprüche, **dadurch gekennzeichnet, dass** der gegenseitige Abstand der Ausnehmungen (6) zueinander maximal 5, vorzugsweise 2 mm beträgt.

9. Lageranordnung nach einem der vorhergehenden Ansprüche, **dadurch gekennzeichnet, dass** ein Teil der Erhebungen (14) zur Sicherung in Umfangsrichtung der Lagerhülse (1) in Öffnungen der Aufnahmebohrung (7) eingreift.

## Claims

1. Bearing arrangement for the bearing of a shaft (2), said bearing arrangement having a bearing sleeve (1) that can be inserted into an accommodating bore (7) of a machine or sliding component, of a support bearing and similar, wherein recesses are provided at least in the accommodating bore for the supplying and discharging of media, wherein the bearing sleeve (1), on its inner bore (3) that faces the bearing and/or guide shaft (2), has a plurality of recesses (6) extending from end face (4) to end face (5) and on the outer cylindrical surface (8) facing the accommodating bore (7) a plurality of elevations (12, 14), wherein at least some (12, 14) of said elevations (12, 14) are realized for the securing of the bearing sleeve (1) in the axial and circumferential direction, some of said elevations (12) are realized so as to be engageable in an at least partially circumferential groove (13) of the accommodating bore (7) for axial locking purposes and the diameter of the bearing sleeve (1) is modifiable in relation to its ultimate installed diameter for the purposes of insertion and removal, wherein the recesses (6) are realized in a groove-shaped and media-conducting manner at least partially around the outer surface of the shaft and extend in a spiral manner, wherein the elevations (9) are provided in a plurality and stand away from the outer cylindrical surface (8), **characterized in that** at least the elevations not serving for the securing of the bearing sleeve have a cylindrical form.

2. Bearing arrangement according to Claim 1, **characterized in that** the groove-shaped recesses (6) extending in a spiral manner on the inner surface of the bearing sleeve (1) are divided into a plurality of sections and are interconnected by means of guide channels, wherein the spiral-shaped sections are offset from one another in such a manner that the flushing medium is forcibly guided to travel by at least one full rotation around the associated bearing shaft.

3. Bearing arrangement according to Claim 1 or 2, **characterized in that** the bearing sleeve (1) has variously arranged surfaces/elevations (9) for the bearing contact with the shaft (2) and the bearing bore (7), and spaces between the surfaces (6)/elevations, wherein, in the installed state, with the shaft (2) and the outer surface of the accommodating and bearing bore (7), the spaces form channels for conducting through cleaning and sterilizing medium.

4. Bearing arrangement according to one of the preceding claims, **characterized in that** the bearing sleeve (1) has a longitudinal slot (10) on the outer surface.

5. Bearing arrangement according to one of the preceding claims, **characterized in that** the inside and outside diameter of the bearing sleeve (1) is modifiable by the gap width (11) of a longitudinal slot (10).

6. Bearing arrangement according to one of the preceding claims, **characterized in that** the bearing sleeve (1) is realized so that it can be rolled up.

7. Bearing arrangement according to one of the preceding claims, **characterized in that** the individual recesses extend at an angle relative to the bearing axis.

8. Bearing arrangement according to one of the preceding claims, **characterized in that** the mutual spacing between the recesses (6) is a maximum of 5 mm and is preferably 2 mm.

9. Bearing arrangement according to one of the preceding claims, **characterized in that** some of the elevations (14) engage in openings in the accommodating bore (7) to secure the bearing sleeve (1) in the circumferential direction.

## Revendications

1. Dispositif de palier pour le logement d'un arbre (2) avec une douille de palier (1) pouvant être insérée dans un perçage de réception (7) d'un composant de machine ou de glissement, d'un palier de support et similaire, au moins dans le perçage de réception étant prévus des évidements pour l'amenée et l'évacuation de fluides, la douille de palier (1) présentant sur son perçage intérieur (3) dirigé vers l'arbre de palier et/ou de guidage (2), plusieurs évidements (6) s'étendant du côté avant (4) au côté avant (5) et sur l'enveloppe extérieure (8) tournée vers le perçage de réception (7), un nombre d'élévations (9, 12, 14), au moins une partie (12, 14) de ces élévations (9, 12, 14) étant réalisée pour le blocage dans le sens axial et dans le sens périphérique de la douille de palier (1), une partie de ces élévations (12) étant réalisée pour le blocage axial de manière à pouvoir venir en prise dans une rainure (13) au moins partiellement rotative du perçage de réception (7) et le diamètre de la douille de palier (1) pouvant être modifié par rapport à son diamètre de montage final à des fins de montage et démontage, les évidements (6) étant réalisés au moins partiellement en forme de rainure et dirigeant les fluides autour de l'enveloppe de l'arbre (2) et s'étendant de manière hélicoïdale, les élévations (9) étant prévues dans une pluralité et dépassant à distance de l'enveloppe extérieure (8), **caractérisé en ce qu'**au moins les élévations ne servant pas de blocage de douille de palier présentent une forme cylindrique.

2. Dispositif de palier selon la revendication 1, **caractérisé en ce que** les évidements en forme de rainure s'étendant de manière hélicoïdale sur l'enveloppe intérieure de la douille de palier (1) sont divisés en plusieurs sections et sont reliés entre eux par des conduites directrices, les sections hélicoïdales étant décalées les unes par rapport aux autres de telle sorte que le fluide de rinçage soit guidé à force au moins d'une rotation complète sur l'arbre de palier associé.

3. Dispositif de palier selon la revendication 1 ou 2, **caractérisé en ce que** la douille de palier (1) présente des surfaces/élévations (9) disposées différemment pour le contact de palier avec l'arbre (2) et le perçage de palier (7) et des espaces intermédiaires entre les surfaces (6)/élévations, les espaces intermédiaires formant à l'état monté avec l'arbre (2) et l'enveloppe du perçage de réception et de palier (7), des canaux pour le passage de fluide de nettoyage et de stérilisation.

4. Dispositif de palier selon l'une quelconque des revendications précédentes, **caractérisé en ce que** la douille de palier (1) présente côté enveloppe une fente longitudinale (10).

5. Dispositif de palier selon l'une quelconque des revendications précédentes, **caractérisé en ce que** la douille de palier (1) peut être modifiée autour de la largeur de fente (11) d'une fente longitudinale (10) dans son diamètre intérieur et extérieur.

6. Dispositif de palier selon l'une quelconque des revendications précédentes, **caractérisé en ce que** la douille de palier (1) est réalisée de manière à pouvoir s'enrouler en soi.

7. Dispositif de palier selon l'une quelconque des revendications précédentes, **caractérisé en ce que** les évidements individuels s'étendent dans un angle par rapport à l'axe de palier.

8. Dispositif de palier selon l'une quelconque des revendications précédentes, **caractérisé en ce que** la distance mutuelle entre les évidements (6) s'élève au maximum à 5, de préférence à 2 mm.

9. Dispositif de palier selon l'une quelconque des revendications précédentes, **caractérisé en ce qu'**une partie des élévations (14) s'engage pour le blocage dans le sens périphérique de la douille de palier (1) dans des ouvertures du perçage de réception (7).
